(19) Europäisches Patentamt
European Patent Office
Office européen des brevets

(11) Veröffentlichungsnummer: **0 428 811 A1**

(12) **EUROPÄISCHE PATENTANMELDUNG**

(21) Anmeldenummer: **89810880.8**

(22) Anmeldetag: **17.11.89**

(51) Int. Cl.5: **A47J 43/046**, B01F 15/06

(43) Veröffentlichungstag der Anmeldung:
**29.05.91 Patentblatt 91/22**

(84) Benannte Vertragsstaaten:
**AT BE CH DE ES FR GB GR IT LI LU NL SE**

(71) Anmelder: **SEIFNER, Josef Manfred**
**Alte Winterthurerstrasse 98**
**CH-8304 Wallisellen(CH)**

(72) Erfinder: **SEIFNER, Josef Manfred**
**Alte Winterthurerstrasse 98**
**CH-8304 Wallisellen(CH)**

(74) Vertreter: **Feldmann, Clarence Paul et al**
**c/o Patentanwaltsbüro FELDMANN AG**
**Postfach Kanalstrasse 17**
**CH-8152 Glattbrugg(CH)**

(54) **Mobiler Mixer.**

(57) Der Mixer dient zur Herstellung von Saucen, die warm zubereitet werden müssen. Er hat dazu eine konische Aufnahmeöffnung (11) deren Wand beheizt ist. In die Aufnahmeöffnung kann ein entsprechend konisch geformter Mixbecher (5) eingesetzt werden. Damit die Wand der Aufnahmeöffnung rasch die erforderliche Temperatur von etwa 50 Grad Celsius erreicht, hat sie eine gleichmässige Wandstärke von 3 bis 5 Millimeter und ist zwecks möglichst gutem Wärmeübergang ein Heizband (30) aufgeklebt.

Fig.2

## MOBILER MIXER

Die Erfindung bezieht sich auf einen mobilen Mixer mit einem Gehäuse, in dem ein drehzahlregulierbarer Motor eingebaut ist, wobei das Gehäuse eine konische Aufnahmeöffnung mit beheizbarer Wand aufweist, in die ein entsprechend geformter Mixbecher formschlüssig einsetzbar ist. Ein derartiger Mixer erlaubt Buttersaucen, wie Sauce Hollandaise, Sauce Bearnaise und ähnliche Saucen, die bisher in einer Pfanne am Herd, unter ständigem Rühren bei konstanter Temperatur hergestellt werden mussten, auf bequemere Art zuzubereiten.

Aus der CH-A-664'480 ist ein derartiger Mixer bekannt geworden. Der in dieser Patentschrift beschriebene Mixer hat den Nachteil, dass die Zeit zum erstmaligen Aufwärmen, bis die Wand der konischen Aufnahmeöffnung die richtige Temperatur erreicht hat, relativ lang ist. Dazu kommt noch, dass man die Saucen nicht lange aufbewahren kann. Sie muss jeweils frisch angemacht und serviert werden. Die lange Aufwärmezeit wird daher im Betrieb einer Grossküche als besonders störend empfunden, weil man den Gast ja so rasch wie möglich bedienen will.

Die Erfindung hat sich daher zur Aufgabe gestellt, einen derartigen Mixer zu schaffen, bei dem die Aufwärmezeit bis zur Gebrauchstemperatur möglichst gering ist.

Die Erfindung löst die gestellte Aufgabe mit einem Mixer, der die Merkmale des Patentanspruches 1 aufweist.

In der beigefügten Zeichnung ist ein Ausführungsbeispiel des Erfindungsgegenstandes dargestellt:

Figur 1 zeigt einen Schnitt durch einen Mixer bekannter Bauart.

Figur 2 zeigt den oberen Gehäuseteil eines Mixers nach der Erfindung und

Figur 3 zeigt ein Heizband mit Anschlüssen.

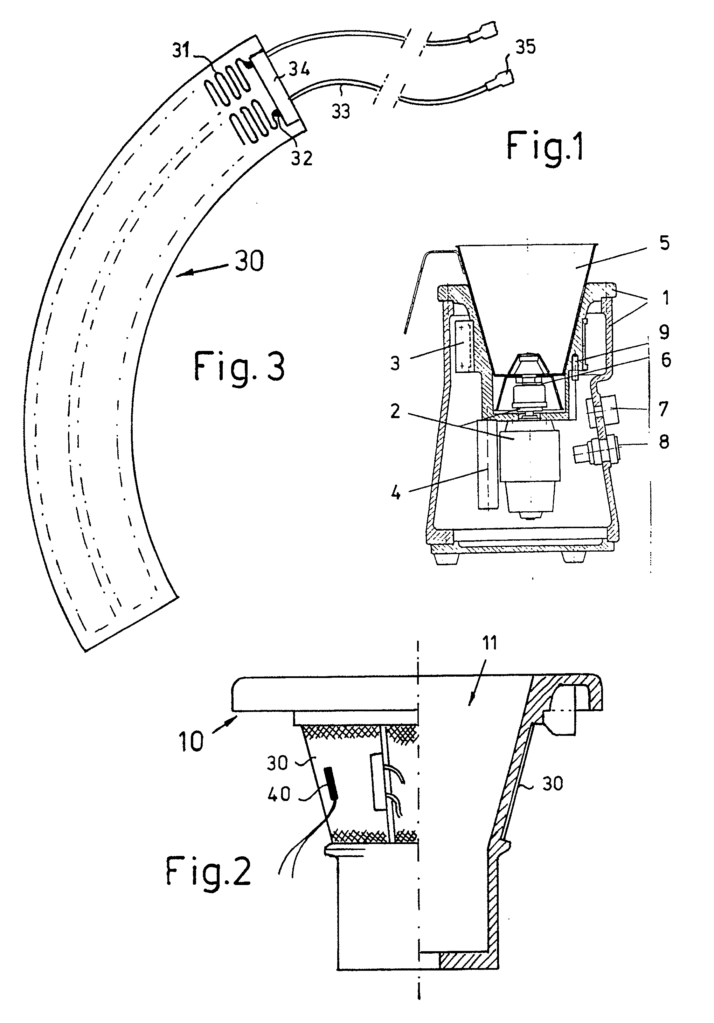

Der in Figur 1 dargestellte bekannte Mixer mit beheizbarer konischen Aufnahmeöffnung hat ein Gehäuse 1, in dem ein Motor 2 untergebracht ist. Die Aufnahmeöffnung wird durch Heizband 3 beheizt und 9 ist ein in den oberen Gehäuseteil eingesetzter Temperaturfühler. Der in die Aufnahmeöffnung eingesetzte Mixbecher 5 ist mit einem im Boden angeordneten Mixmesser mit Kupplung 6 und einem demontierbarem Standorgan versehen.

Im unteren Gehäuseteil befindet sich ein Potentiometer 7 für die Drehzahleinstellung des Motors und ein Schalter 8 für die Heizung.

Wie aus der Zeichnung ersichtlich, ist die Wandstärke im unteren Teil der konischen Aufnahmeöffnung erheblich grösser als im oberen Teil. Dies hat zur Folge, dass der obere Teil schneller erwärmt wird als der untere Teil, in dem der Temperaturfühler untergebracht ist. Es dauert daher eine gewisse Zeit, (etwa 5 Minuten), bis die Temperatur entlang der Wand der konischen Aufnahmeöffnung überall gleich ist. Da die gewünschte Endtemperatur niedrig ist (ca. 50 Grad Celsius) wird während der Aufwärmeperiode ein relativ grosser Anteil der Heizenergie an die Umgebung abgegeben. Figur 2 zeigt den oberen Gehäuseteil 10 eines Mixers nach der Erfindung, dessen andere Bestandteile etwa denjenigen nach Figur 1 entsprechen. Die rechte Hälfte der Figur 2 zeigt den aus einer Aluminiumlegierung hergestellten Gehäuseteil 10 im Schnitt, die linke Hälfte in Ansicht. Die konische Aufnahmeöffnung 11 weist entlang des beheizten Teiles eine gleichmässige Wandstärke von etwa 3 Millimeter auf.

Die Innenwand der konischen Aufnahmeöffnung ist glatt bearbeitet, damit ein guter Wärmeübergang zum Mixbecher gewährleistet ist. Die Aussenwand des konischen Teiles ist ebenfalls glatt bearbeitet, damit das Heizband 30 darauf aufgeklebt werden kann.

In Figur 3 ist dieses Band für sich dargestellt. Es hat die Form eines Kreisring-Segmentes dessen Dimensionen der konischen Aussenfläche des beheizbaren Teiles entspricht. Der Streifen besteht aus zwei Folien eines hitzebeständigen isolierden Kunststoffes. Auf eine Folie ist die eigentliche Heizspirale 31 mit Anschlussteilen 32 aus Widerstandsmaterial aufgedruckt, oder mittels einer Schablone aufgespritzt oder aufgedämpft. Danach ist die zweite isolierende Kunststoff-Folie angebracht, sodass die Heizspirale voll isoliert zwischen den Folien liegt. An die Anschlussteile 32 sind die flexiblen Anschlusskabel 33 angelötet und durch einen isolierenden Streifen 34 abgedeckt. Die Enden dieses Kabels sind mit Kabelschuhen 35 versehen.

Eine Seite einer Folie ist mit einer Selbstklebeschicht versehen, mit der sie auf die konische Aussenseite des beheizbaren Teiles aufklebbar ist. Diese Selbstklebeschicht ist durch eine abziehbare Abdeckfolie abgedeckt. Vor dem Ankleben wird diese Folie abgelöst.

Die linke Hälfte der Figur 2 zeigt einen Teil des fertig aufgeklebten Heizbandes mit seinen Anschlusskablen. Da das Heizband dünn ist und in gut wärmeleitendem Kontakt mit der Wand der konischen Aufnahmeöffnung steht, genügt es ein Wärmefühlelement 40 aussen auf das Heizband aufzukleben, um damit die Wandtemperatur zu regeln. Der elektronische Temperaturregelteil ist in einem Gehäuse 4 wie beim Gerät nach Figur 1 untergebracht.

**Ansprüche**

1.) Mobiler Mixer mit einem Gehäuse, in dem ein drehzahlregulierbarer Motor eingebaut ist, wobei das Gehäuse eine konische Aufnahmeöffnung mit beheizbarer Wand aufweist, in die ein entsprechend konisch geformter Mixbecher formschlüssig einsetzbar ist, dadurch gekennzeichnet, dass die Wand der konischen Aufnahmeöffnung mindestens entlang ihres beheizbaren Teiles eine gleichmässige Wandstärke aufweist, die kleiner oder gleich 5 Millimeter ist und dass ein elektrisch beheizbares Heizband auf die konische Aussenfläche aufgeklebt ist.

2.) Mixer nach Anspruch 1, dass das Heizband zwei hitzebeständige, isolierende Kunststoff-Folien umfasst, zwischen denen eine elektrische leitende Heizspirale angebracht ist.

3.) Mixer nach Anspruch 2, dass die in Betriebszustand innenliegende Kunststoff-Folie mit einer Selbstklebeschicht versehen ist.

4.) Mixer nach Anspruch 2, dadurch gekennzeichnet, dass flexible, isolierte Anschlussleitungen an einem Ende der Heizspirale befestigt sind.

5.) Mixer nach Anspruch 1, dadurch gekennzeichnet, dass die Wandtemperatur der konischen Aufnahmeöffnung mit Hilfe eines auf den Widerstandstreifen aufgeklebten Temperaturfühlers (40), eines elektronischen Schaltkreises und eines im Gehäuse angeordneten Potentiometers (7) einstellbar ist.

Fig.1

Fig.3

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | CH-A-664480 (SEIFNER MANFRED J.) <br> * das ganze Dokument * <br> --- | 1, 2, 3, 5 | A47J43/046 <br> B01F15/06 |
| Y | EP-A-293026 (BRAVO S.P.A.) <br> * Spalte 2, Zeile 40 – Spalte 4, Zeile 47; Figur 1 * <br> --- | 1, 2, 3, 5 | |
| A | GB-A-150673 (GYURIS JANOS) <br> * Seite 2, Zeile 13 – Seite 4, Zeile 10 * <br> ----- | 2, 4 | |

**RECHERCHIERTE SACHGEBIETE (Int. Cl.5)**

A47J
B01F
H05B

Der vorliegende Recherchenbericht wurde für alle Patentansprüche erstellt

| Recherchenort | Abschlußdatum der Recherche | Prüfer |
|---|---|---|
| DEN HAAG | 11 JULI 1990 | FUOCHI R. |